Europäisches Patentamt

**European Patent Office**

**Office européen des brevets**

(11) Veröffentlichungsnummer: **0 042 068**
**B1**

(12) **EUROPÄISCHE PATENTSCHRIFT**

(45) Veröffentlichungstag der Patentschrift:
**11.07.84**

(51) Int. Cl.³: **F 16 F 1/36**, B 32 B 17/04

(21) Anmeldenummer: **81103742.3**

(22) Anmeldetag: **15.05.81**

(54) **Ovaler Federrahmen.**

(30) Priorität: **14.06.80 DE 3022418**

(43) Veröffentlichungstag der Anmeldung:
**23.12.81 Patentblatt 81/51**

(45) Bekanntmachung des Hinweises auf die Patenterteilung:
**11.07.84 Patentblatt 84/28**

(84) Benannte Vertragsstaaten:
**FR GB IT**

(56) Entgegenhaltungen:
**DE - A - 2 225 395**
**DE - A - 2 716 233**
**DE - B - 1 218 222**
**DE - B - 1 228 863**
**DE - C - 655 469**
**GB - A - 658 898**
**US - A - 2 135 057**
**US - A - 3 682 466**

(73) Patentinhaber: **Messerschmitt-Bölkow-Blohm**
**Gesellschaft mit beschränkter Haftung,**
**Robert-Koch-Strasse, D-8012 Ottobrunn (DE)**

(72) Erfinder: **Schmidt, Helmut, Dipl.-Ing., Heigelstrasse 29,**
**D-8000 München 90 (DE)**
Erfinder: **Ramm, Ulrich, Ing. grad.,**
**Kramer-Klett-Strasse 39a, D-8014 Neubiberg (DE)**
Erfinder: **Schröder, Alexander, Ing. grad.,**
**Uhlandstrasse 39, D-8012 Ottobrunn (DE)**

ACTORUM AG

## Beschreibung

Die Erfindung betrifft einen ovalen Federrahmen zur Belastungsaufnahme in Rahmenebene entsprechend dem Oberbegriff des Anspruchs 1.

Ein derartiger Federrahmen ist durch die DE-C Nr. 655469 bekannt. Bei dieser Federanordnung für Fahrzeuge aller Art besteht der Federrahmen aus vertikalen elastischen Rahmenlamellen aus Stahl, die durch Bunde oder ähnliche Mittel zusammengehalten werden. Mit diesem Federrahmen können bereits manche Federprobleme für Fahrzeuge besser gelöst werden als die bisher verwendeten Blattfedern. Nachteilig für Leichtbaukonstruktionen ist das hohe Gewicht dieser Federanordnung, eine schwierig zu erzielende Dämpfung und die schlechte Aufnahme von Querkräften, zumal die einzelnen Rahmenlamellen nur an zwei Stellen miteinander verbunden sind.

Der Erfindung liegt die Aufgabe zugrunde, Federrahmen der eingangs genannten Art zu schaffen, mit denen die vorstehend aufgeführten Nachteile der bekannten Federanordnung behoben werden.

Diese Aufgabe wird erfindungsgemäss mit den im kennzeichnenden Teil des Anspruchs 1 angegebenen Merkmalen gelöst. Vorteilhafte Weiterbildungen der Erfindung enthalten die Ansprüche 2 bis 10.

Durch die Erfindung ist es möglich, die vorteilhaften Eigenschaften von faserverstärkten Kunststoffen für Federung und Dämpfung, die bereits für Scheibenfedern bekannt sind (siehe z.B. US-A Nr. 3682466), auch für Federrahmen anzuwenden. Dabei kann gegenüber dem Aufbau der Scheibenfedern mit horizontalen Lagen, also quer zur Belastung, ein wirkungsvollerer Aufbau der Lagen in der Rahmenebene, also in Belastungsebene, erfolgen. Ein weiterer Vorteil gegenüber bekannten Federanordnungen ist darin zu sehen, dass mit den Zwischen- und Aussenlagen auch Querzugspannungen und Querkräfte aufgenommen werden können. Die Wickelkörper nehmen im wesentlichen die Normal- und Biegespannungen auf.

Die Erfindung wird nachfolgend anhand eines in der Zeichnung dargestellten Ausführungsbeispiels näher erläutert. Es zeigen:

Fig. 1 einen Federrahmen zum Teil in der Ansicht und in verschiedenen Schnitten in der Rahmenebene;

Fig. 2 einen Schnitt entsprechend II-II der Fig. 1;

Fig. 3 eine Darstellung des Punktes III der Fig. 2 im vergrösserten Massstab, und

Fig. 4 den Federrahmen nach Fig. 1 in einem Einspannbeschlag im Teilschnitt.

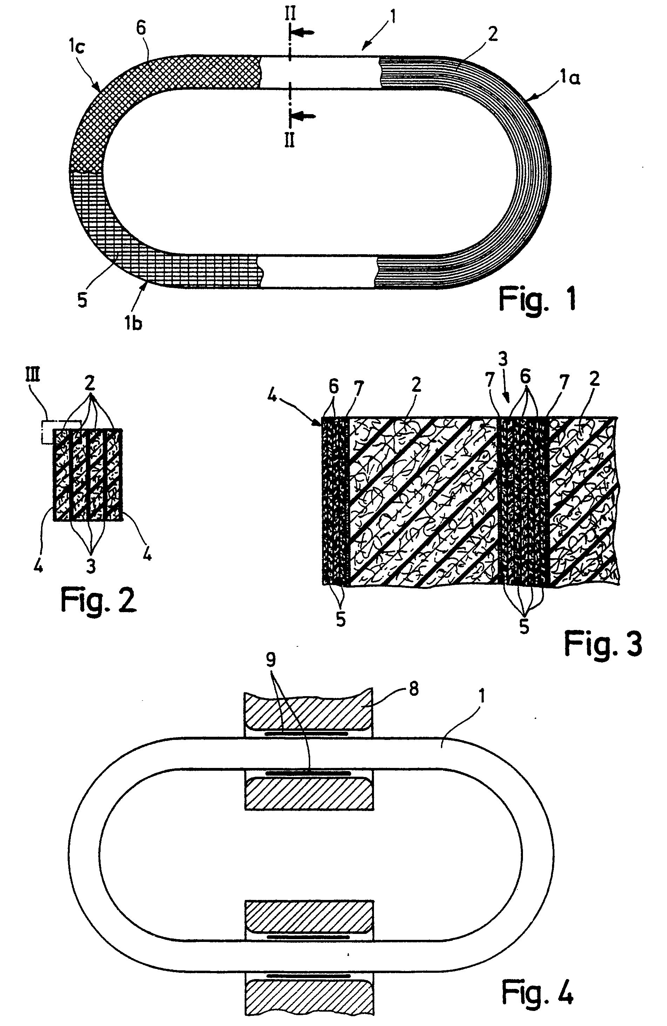

Die Fig. 1 zeigt die äussere Form eines Federrahmens 1, der zur besseren Einleitung von Kräften gerade Mittelteile und runde Seitenteile aufweist. Die äussere Form des Federrahmens kann auch jede andere zweckmässige ovale Form haben.

Die Fig. 2 und 3 zeigen den inneren Aufbau des Federrahmens 1 mit Wickelkörpern 2 aus in Rahmenebene angeordneten unidirektionalen, mit Kunstharz getränkten Faserlagen und aus Zwischenlagen 3 und Aussenlagen 4 von mit Kustharz getränkten Gewebeschichten. Die Zwischenlagen 3 und Aussenlagen 4 bestehen aus Einzellagen 5 und 6, deren Faserrichtung in den Gewebeschichten entweder parallel und senkrecht (0/90°-Lagen 5) oder diagonal zur Hauptbeanspruchungsrichtung ($\pm$45°-Lagen 6) angeordnet sind. In der Fig. 3 ist der Aufbau der Zwischenlagen 3 und der Aussenlagen 4 aus abwechselnd 0/90°-Lagen 5 und $\pm$45°-Lagen 6 ersichtlich, wobei die Aussenlagen als äusserste Lagen je eine $\pm$45°-Lagen 6 haben. Eine derartige Anordnung der Gewebelagen mit ihren in den einzelnen Schichten des Federrahmens unterschiedliche Faserrichtung gewährleistet die Aufnahme aller Querzug-, Normal- und Schubkräfte, wobei sich die beiden Gewebelagen durch die Bildung von dreieckförmigen „Faser-Fachwerken" gegenseitig versteifen. Um die Verbindung zwischen den Wickelkörpern 2 und den jeweiligen Zwischenlagen 3 und Aussenlagen 4 zu verbessern, sind Klebeschichten 7 angeordnet, die aus Klebeprepregs oder Klebemitteln bestehen können. Die Anzahl der Einzellagen 5 und 6 sowie ihre gegenseitige Zuordnung in den Zwischenlagen 3 und Aussenlagen 4 kann je nach den Belastungsanforderungen differieren.

Die Fig. 1 zeigt in der Mitte eine Ansicht des Federrahmens 1, im Bereich 1a ein Schnitt durch einen der Wickelkörper 2, im Bereich 1b ein Schnitt durch eine der 0/90°-Lagen 5 und im Bereich 1c ein Schnitt durch eine der $\pm$45°-Lagen 6. Der dargestellte Aufbau des Federrahmens 1 gestattet bei einem geringen Gewicht und veränderbaren Federsteifigkeiten eine sehr hohe statische und dynamische Belastung.

In der Fig 4 ist schematisch die Einspannung des Federrahmens 1 in einen Einspannbeschlag 8 dargestellt. Dabei sind beiderseits der Einspannstellen des Federrahmens dünne, abriebfeste Plättchen 9, die beispielsweise aus Federstahl bestehen, zwischengelegt. Durch die Veränderung der Länge und Dicke der Plättchen 9 kann die Grösse der auftretenden Einspannkräfte, vor allem die Grösse der Querkräfte aus dem Einspannmoment beeinflusst und die Federsteifigkeit z.B. zum Ausgleich von Fertigungstoleranzen variiert werden. Es können auch jeweils mehrere Plättchen 9 übereinander beigelegt werden.

## Patentansprüche

1. Ovaler Federrahmen zur Belastungsaufnahme in Rahmenebene bestehend aus mehreren, in der Rahmenebene angeordneten und miteinander verbundenen Schichten, dadurch gekennzeichnet, dass die Schichten abwechselnd aus aus mehreren Einzellagen (5 und 6) zusammengesetzten Lagen (3 und 4) von mit Kunstharz getränkten Gewebeschichten und aus Wickelkörpern (2) von mit Kunstharz getränkten unidirektionalen Fasern bestehen, und dass die einzelnen Lagen flächig miteinander verbunden sind.

2. Federrahmen nach Anspruch 1, gekennzeichnet durch zwei Aussenlagen (4) und mehrere Wickelkörper (2) mit dazwischen angeordneten Zwischenlagen (3).

3. Federrahmen nach den Ansprüchen 1 und 2, dadurch gekennzeichnet, dass die Zwischenlagen (3) und Aussenlagen (4) aus Einzellagen bestehen, deren Faserrichtung in den Gewebeschichten entweder parallel und senkrecht (0/90°-Lagen 5) oder diagonal zur Hauptbeanspruchungsrichtung (±45°-Lagen 6) angeordnet sind.

4. Federrahmen nach Anspruch 3, dadurch gekennzeichnet, dass die Zwischenlagen (3) und Aussenlagen (4) abwechselnd aus den 0/90°-Lagen (5) und ±45°-Lagen (6) bestehen, wobei für die Zwischenlagen mindestens zwei 0/90°-Lagen (5) und zwischen diesen eine ±45°-Lage (6) und für die Aussenlagen mindestens je eine 0/90°-Lage (5) und ±45°-Lage (6), wobei eine ±45°-Lage aussen liegt, angeordnet sind.

5. Federrahmen nach den Ansprüchen 1 bis 4, dadurch gekennzeichnet, dass mindestens zwei, vorzugsweise vier Wickelkörper (2), angeordnet sind.

6. Federrahmen nach Anspruch 3, dadurch gekennzeichnet, dass in den 0/90°-Lagen (5) unterschiedliche Faseranteile vorhanden sind.

7. Federrahmen nach Anspruch 1 und einem oder mehreren der Ansprüche 2 bis 6, dadurch gekennzeichnet, dass für die Wickelkörper (2) und/ oder für die Zwischenlagen (3) und Aussenlagen (4) unterschiedliche Fasern verwendet sind.

8. Federrahmen nach Anspruch 1 und einem oder mehreren der Ansprüche 2 bis 6, dadurch gekennzeichnet, dass zwischen den Wickelkörpern (2) und den jeweils anschliessenden Zwischenlagen (3) und Aussenlagen (4) Klebeschichten (7) angeordnet sind.

9. Federrahmen nach den Ansprüchen 1 bis 8, dadurch gekennzeichnet, dass zwischen einem Einspannbeschlag (8) und Einspannstellen des Federrahmens (1) dünne, abriebfeste Plättchen (9), beispielsweise aus Federstahl, zwischengelegt sind.

10. Federrahmen nach den Ansprüchen 1 bis 9, gekennzeichnet durch einen rechteckigen Querschnitt und gerade Bereiche an den Einspannstellen.

## Claims

1. An oval spring frame for absorbing load in the plane of the frame, consisting of several layers which are arranged in the plane of the frame and which are connected to one another, characterised in that the layers consist alternately of plies (3 and 4), assembled from several individual plies (5 and 6), of fabric layers impregnated with synthetic resin, and of coil bodies or coil formers of unidirectional fibres impregnated with synthetic resin, and in that the individual plies are flatly connected to one another.

2. A spring frame according to Claim 1, characterised by two outer plies (4) and several coil bodies or coil formers (2) with intermediate plies (3) arranged therebetween.

3. A spring frame according to Claims 1 and 2, characterised in that the intermediate plies (3) and the outer plies (4) consists of individual plies the fibre direction of which in the layers of fabric is arranged either parallel and perpendicular (0/90° plies 5), or diagonally to the main direction of stress (±45° plies 6).

4. A spring frame according to Claim 3, characterised in that the intermediate plies (3) and the outer plies (4) consist alternately of the 0/90° plies (5) and the ±45° plies (6), in which respect the intermediate plies consist of at least two 0/90° plies (5) with one ±45° ply (6) arranged therebetween, and the outer plies consist of at least one 0/90° ply (5) and one ±45° ply (6) with the or one ±45° ply arranged at the outside.

5. A spring frame according to Claims 1 to 4, characterised in that at least two and preferably four coil bodies or coil formers (2) are provided.

6. A spring frame according to Claim 3, characterised in that different fibre portions are present in the 0/90° plies (5).

7. A spring frame according to Claim 1 and one or more of Claims 2 to 6, characterised in that different fibres are used for the coil bodies or coil formers (2) and/or for the intermediate plies (3) and the outer plies (4).

8. A spring frame according to Claim 1 and one or more of Claims 2 to 6, characterised in that layers of adhesive (7) are arranged between the coil bodies or coil formers (2) and the respectively adjacent intermediate plies (3) and outer plies (4).

9. A spring frame according to Claims 1 to 8, characterised in that thin abrasion-proof platelets (9), for example made of spring steel, are interposed between a clamping fitting (8) and clamping points of the spring frame (1).

10. A spring frame according to Claims 1 to 9, characterised by a rectangular cross-section and straight regions at the clamping points.

## Revendications

1. Cadre élastique ovale pour l'absorption des contraintes dans le plan du cadre, composé de plusieurs empilements disposés dans le plan du cadre et mutuellement raccordés, caractérisé par le fait que les empilements sont alternativement constitués par des couches (3 et 4), composées de plusieurs couches individuelles (5 et 6), de tissus imprégnés de résine synthétique, et par des corps bobinés (2) de fibres unidirectionnelles imprégnées de résine synthétique, et que les différentes couches sont mutuellement raccordées par leurs surfaces.

2. Cadre élastique selon la revendication 1, caractérisé par deux couches extérieures (4) et plusieurs corps bobinés (2) avec couches intermédiaires (3) intercalées.

3. Cadre élastique selon les revendications 1 et 2, caractérisé par le fait que les couches intermédiaires (3) et les couches extérieures (4) se composent de couches individuelles dont la direction des fibres dans les tissus est orientée soit parallèlement et perpendiculairement (couches 5 à 0/90°), soit en diagonale par rapport au sens des sollicitations principales (couches 6 à ±45°).

4. Cadre élastique selon la revendication 3, caractérisé par le fait que les couches intermédiaires (3) et les couches extérieures (4) se composent alternativement de couches (5) à 0/90° et de couches (6) à ±45°, les couches intermédiaires comprenant au moins deux couches (5) à 0/90°, et entre celle-ci une couche (6) à ±45°, et les couches extérieures comprenant respectivement au moins une couche (5) à 0/90° et une couche (6) à ±45°, une couche à ±45° étant située à l'extérieur.

5. Cadre élastique selon les revendications 1 à 4, caractérisé par le fait qu'il comporte au moins deux, de préférence quatre corps bobinés (2).

6. Cadre élastique selon la revendication 3, caractérisé par le fait que dans les couches (5) à 0/90° sont prévues différentes composantes de fibres.

7. Cadre élastique selon la revendication 1 et une ou plusieurs des revendications 2 à 6, caractérisé par le fait que pour les corps bobinés (2) et/ou pour les couches intermédiaires (3) et les couches extérieures (4) on utilise différentes fibres.

8. Cadre élastique selon la revendication 1 et une ou plusieurs des revendications 2 à 6, caractérisé par le fait que des couches de colle (7) sont placées entre les corps bobinés (2) et les couches intermédiaires (3) et les couches extérieures (4) s'y raccordant respectivement.

9. Cadre élastique selon les revendications 1 à 8, caractérisé par le fait qu'entre une ferrure de fixation (8) et des points d'encastrement du cadre élastique sont insérées de minces plaquettes (9) résistant à l'abrasion, par exemple en acier à ressort.

10. Cadre élastique selon les revendications 1 à 9, caractérisé par une section transversale rectangulaire et des zones rectilignes aux points d'encastrement.

Fig. 1

Fig. 2

Fig. 3

Fig. 4